# EUROPEAN PATENT APPLICATION

(11) **EP 4 694 419 A1**
(43) Date of publication of application: **11.02.2026**
(21) Application number: 23931583.1
(22) Date of filing: 07.04.2023
(51) Int. Cl.: H04W 64/00

(54) **METHOD FOR SELECTING TERMINAL USED FOR RANGING OR SIDELINK (SL) LOCATION, AND APPARATUS, DEVICE AND STORAGE MEDIUM**

(71) Applicant: Beijing Xiaomi Mobile Software Co., Ltd., Beijing 100085 (CN)
(72) Inventor: MAO, Yuxin, Beijing 100085 (CN); SHEN, Yang, Beijing 100085 (CN); LU, Wei, Beijing 100085 (CN)
(74) Representative: Stöckeler, Ferdinand
(86) International application number: PCT/CN2023/087135
(87) International publication number: WO 2024/207523

(57) **Abstract**

Disclosed in the embodiments of the present disclosure are a method for selecting a terminal used for ranging or sidelink (SL) location, and an apparatus, a device, a chip system and a storage medium, which can be used in a communication system. The method comprises: a first terminal sending first request information, wherein the first request information is used for requesting a core network device to select a second terminal from among at least one candidate terminal or to allocate a second terminal for a first terminal, the candidate terminal is related to information of the first terminal, and information of the second terminal is used for performing ranging or SL location on the first terminal. By implementing the method of the present disclosure, a terminal for ranging or SL location can be accurately selected.

## Description

### TECHNICAL FIELD

The disclosure relates to the field of wireless communication technologies, and in particular to a method and an apparatus for selecting a terminal for ranging or sidelink (SL) positioning, a device, and a storage medium.

### BACKGROUND

To support direct communication between terminals, a sidelink (SL) communication mode is introduced. A terminal may not connect directly to a base station but may communicate with the base station via a relay function of another terminal. Ranging refers to determining a distance between two or more terminals or a direction from one terminal to another terminal via a PC5 interface. The PC5 interface refers to a communication interface between terminals, for example, a short-range direct communication interface between vehicles, pedestrians, and road infrastructure. SL positioning refers to estimating a position of a target terminal based on an SL. For example, ranging or SL positioning of the target terminal may be performed based on information of a terminal (for example, a located user equipment (UE) or a located terminal). A referenced terminal may be, for example, an SL reference terminal whose position is known or can be known in ranging or SL positioning.

Thus, it is necessary to accurately select a terminal for ranging or SL positioning.

### SUMMARY

Embodiments of the disclosure provide a method and an apparatus for selecting a terminal for ranging or sidelink (SL) positioning, a device, a chip system, a storage medium, a computer program, and a computer program product, which may be applied in the field of communication technologies and may achieve accurate selection of the terminal for ranging or SL positioning.

In a first aspect, embodiments of the disclosure provide a method for selecting a terminal for ranging or SL positioning. The method is performed by a first terminal, including: sending first request information, in which the first request information requests a core network device to select a second terminal from at least one candidate terminal or assign a second terminal to the first terminal, the candidate terminal is related to information of the first terminal, and information of the second terminal is used for performing the ranging or SL positioning of the first terminal.

In a second aspect, embodiments of the disclosure provide a method for selecting a terminal for ranging or SL positioning. The method is performed by a core network device, including: receiving first request information, in which the first request information requests the core network device to select a second terminal from at least one candidate terminal or assign a second terminal to a first terminal, the candidate terminal is related to information of the first terminal, and information of the second terminal is used for performing the ranging or SL positioning on the first terminal.

In a third aspect, embodiments of the disclosure provide a method for selecting a terminal for ranging or SL positioning. The method is performed by a third terminal, including: sending first request information, in which the first request information requests a core network device to select a second terminal from at least one candidate terminal or assign a second terminal to a first terminal, the candidate terminal is related to information of the first terminal, and information of the second terminal is used for performing the ranging or SL positioning on the first terminal.

In a fourth aspect, embodiments of the disclosure provide a communication apparatus. The communication apparatus has a function of realizing some or all of the functions of the first terminal in the method described in the first aspect. For example, the communication apparatus may have functions in some or all embodiments in the disclosure, or may have a function of implementing any one of the embodiments in the disclosure independently. The functions may be realized by hardware or by hardware executing corresponding software. The hardware or software includes one or more units or modules corresponding to the functions described above.

Optionally, in an embodiment of the disclosure, a structure of the communication apparatus may include a transceiver module and a processing module. The processing module is configured to support the communication apparatus to execute the functions in the method described above. The transceiver module is configured to support communications between the communication apparatus and other apparatuses. The communication apparatus may further include a storage module coupled with the transceiver module and the processing module, which stores necessary computer programs and data for the communication apparatus.

For example, the processing module may be a processor, the transceiver module may be a transceiver or a communication interface, and the storage module may be a memory.

In a fifth aspect, embodiments of the disclosure provide another communication apparatus. The communication apparatus has a function of realizing some or all of the functions of the core network device in the method described in the second aspect. For example, the communication apparatus may have the functions in some or all embodiments in the disclosure, or may have a function of implementing any one of the embodiments in the disclosure independently. The functions may be realized by hardware or by hardware executing corresponding software. The hardware or software includes one or more units or modules corresponding to the functions described above.

Optionally, in an embodiment of the disclosure, a structure of the communication apparatus may include a transceiver module and a processing module. The processing module is configured to support the communication apparatus to execute the functions in the method described above. The transceiver module is configured to support communications between the communication apparatus and other apparatuses. The communication apparatus may further include a storage module coupled with the transceiver module and the processing module, which stores necessary computer programs and data for the communication apparatus.

In a sixth aspect, embodiments of the disclosure provide another communication apparatus. The communication apparatus has a function of realizing some or all of the functions of the third terminal in the method described in the third aspect. For example, the communication apparatus may have the functions in some or all embodiments in the disclosure, or may have a function of implementing any one of the embodiments in the disclosure independently. The functions may be realized by hardware or by hardware executing corresponding software. The hardware or software includes one or more units or modules corresponding to the functions described above.

Optionally, in an embodiment of the disclosure, a structure of the communication apparatus may include a transceiver module and a processing module. The processing module is configured to support the communication apparatus to execute the functions in the method described above. The transceiver module is configured to support communications between the communication apparatus and other apparatuses. The communication apparatus may further include a storage module coupled with the transceiver module and the processing module, which stores necessary computer programs and data for the communication apparatus.

In a seventh aspect, embodiments of the disclosure provide a communication device. The communication device includes a processor. When the processor calls a computer program in a memory, the method as described in the first aspect is performed.

In an eighth aspect, embodiments of the disclosure provide a communication device. The communication device includes a processor. When the processor calls a computer program in a memory, the method as described in the second aspect is performed.

In a ninth aspect, embodiments of the disclosure provide a communication device. The communication device includes a processor. When the processor calls a computer program in a memory, the method as described in the third aspect is performed.

In a tenth aspect, embodiments of the disclosure provide a communication device. The communication device includes a processor and a memory. The memory is configured to store a computer program; and the processor is configured to execute the computer program stored in the memory, so that the communication device performs the method as described in the first aspect.

In an eleventh aspect, embodiments of the disclosure provide a communication device. The communication device includes a processor and a memory. The memory is configured to store a computer program; and the processor is configured to execute the computer program stored in the memory, so that the communication device performs the method as described in the second aspect.

In a twelfth aspect, embodiments of the disclosure provide a communication device. The communication device includes a processor and a memory. The memory is configured to store a computer program; and the processor is configured to execute the computer program stored in the memory, so that the communication device performs the method as described in the third aspect.

In a thirteenth aspect, embodiments of the disclosure provide a communication device. The communication device includes a processor and an interface circuit. The interface circuit is configured to receive code instructions and transmit the code instructions to the processor; and the processor is configured to run the code instructions, so that the communication device performs the method as described in the first aspect.

In a fourteenth aspect, embodiments of the disclosure provide a communication device. The communication device includes a processor and an interface circuit. The interface circuit is configured to receive code instructions and transmit the code instructions to the processor; and the processor is configured to run the code instructions, so that the communication device performs the method as described in the second aspect.

In a fifteenth aspect, embodiments of the disclosure provide a communication device. The communication device includes a processor and an interface circuit. The interface circuit is configured to receive code instructions and transmit the code instructions to the processor; and the processor is configured to run the code instructions, so that the communication device performs the method as described in the third aspect.

In a sixteenth aspect, embodiments of the disclosure provide a communication system. The system includes the communication apparatus as described in the fourth aspect, the communication apparatus as described in the fifth aspect and the communication apparatus as described in the sixth aspect, or the system includes the communication device as described in the seventh aspect, the communication device as described in the eighth aspect and the communication device as described in the ninth aspect, or the system includes the communication device as described in the tenth aspect, the communication device as described in the eleventh aspect and the communication device as described in the twelfth aspect, or the system includes the communication device as described in the thirteenth aspect, the communication device as described in the fourteenth aspect and the communication device as described in the fifteenth aspect.

In a seventeenth aspect, embodiments of the disclosure provide a computer-readable storage medium. The computer-readable storage medium is configured to store instructions used by the first terminal, the core network device, and the third terminal. When the instructions are executed, the first terminal, the core network device, and the third terminal perform the method described above.

In an eighteenth aspect, embodiments of the disclosure provide a computer program product including a computer program. When the computer program is running on a computer, the computer is caused to perform the method described above.

In a nineteenth aspect, embodiments of the disclosure provide a chip system. The chip system includes at least one processor and at least one interface, and is configured to support the first terminal to perform functions involved in the first aspect, for example, to determine or process at least one of data or information involved in the above methods.

In a possible design, the chip system further includes a memory. The memory is configured to save a necessary computer program and data for the terminal. The chip system may be constituted by a chip, or may include a chip and other discrete devices.

In a twentieth aspect, embodiments of the disclosure provide a chip system. The chip system includes at least one processor and at least one interface, and is configured to support the core network device to perform functions involved in the second aspect, for example, to determine or process at least one of data or information involved in the above methods.

In a possible design, the chip system further includes a memory. The memory is configured to save a necessary computer program and data for the terminal. The chip system may be constituted by a chip, or may include a chip and other discrete devices.

In a twenty-first aspect, embodiments of the disclosure provide a chip system. The chip system includes at least one processor and at least one interface, and is configured to support the third terminal to perform functions involved in the third aspect, for example, to determine or process at least one of data or information involved in the above methods.

In a possible design, the chip system further includes a memory. The memory is configured to save a necessary computer program and data for the terminal. The chip system may be constituted by a chip, or may include a chip and other discrete devices.

In a twenty-second aspect, embodiments of the disclosure provide a computer program. When the computer program is running on a computer, the computer is caused to perform the method described above.

In summary, the method and the apparatus for selecting a terminal for ranging or SL positioning, the device, the storage medium, the computer program, and the computer program product provided in the embodiments of the disclosure may achieve the following technical effects.

Since the candidate terminal may be a terminal related to the information of the first terminal, and the first terminal may request the core network device to select the second terminal from the at least one candidate terminal or assign the second terminal to the first terminal, to perform ranging or SL positioning of the first terminal based on the information of the second terminal, accurate selection of a terminal for ranging or SL positioning may be achieved.

### BRIEF DESCRIPTION OF THE DRAWINGS

In order to explain technical solutions in the embodiments of the disclosure or the related art more clearly, the accompanying drawings described in the embodiments of the disclosure or required in the related art will be briefly introduced below.
FIG. 1 is a diagram illustrating an architecture of a communication system according to an embodiment of the disclosure.
FIG. 2 is a flow chart illustrating a method for selecting a terminal for ranging or sidelink (SL) positioning according to an embodiment of the disclosure.
FIG. 3a is a flow chart illustrating a method for selecting a terminal for ranging or SL positioning according to an embodiment of the disclosure.
FIG. 3b is a flow chart illustrating a method for selecting a terminal for ranging or SL positioning according to an embodiment of the disclosure.
FIG. 4 is a flow chart illustrating another method for selecting a terminal for ranging or SL positioning according to an embodiment of the disclosure.
FIG. 5 is a flow chart illustrating another method for selecting a terminal for ranging or SL positioning according to an embodiment of the disclosure.
FIG. 6 is a flow chart illustrating another method for selecting a terminal for ranging or SL positioning according to an embodiment of the disclosure.
FIG. 7 is a flow chart illustrating another method for selecting a terminal for ranging or SL positioning according to an embodiment of the disclosure.
FIG. 8 is a flow chart illustrating yet another method for selecting a terminal for ranging or SL positioning according to an embodiment of the disclosure.
FIG. 9 is a flow chart illustrating yet another method for selecting a terminal for ranging or SL positioning according to an embodiment of the disclosure.
FIG. 10 is a flow chart illustrating yet another method for selecting a terminal for ranging or SL positioning according to an embodiment of the disclosure.
FIG. 11 is a block diagram illustrating a communication apparatus according to an embodiment of the disclosure.
FIG. 12 is a block diagram illustrating a communication device according to an embodiment of the disclosure.
FIG. 13 is a block diagram illustrating a chip according to an embodiment of the disclosure.

### DETAILED DESCRIPTION

Reference will now be made in detail to the exemplary embodiments, examples of which are illustrated in the accompanying drawings. When the following description refers to the accompanying drawings, the same numerals in different accompanying drawings refer to the same or similar elements, unless otherwise indicated. The implementations described in the following exemplary embodiments do not represent all implementations consistent with embodiments of the disclosure. Rather, they are merely examples of devices and methods consistent with some aspects of embodiments of the disclosure as recited in the appended claims.

Terms used in the embodiments of the disclosure are for the purpose of describing specific embodiments only, and are not intended to limit the embodiments of the disclosure. As used in the embodiments of the disclosure and the appended claims, the singular forms "a/an" and "the" are also intended to include the plural forms, unless the disclosure clearly dictates otherwise. It should also be understood that the term "and/or" as used here refers to and includes any and all possible combinations of one or more of the associated listed items.

It should be understood that although the embodiments of the disclosure may use the terms first, second, third, etc. to describe various information, the information should not be limited to these terms. These terms are only used to distinguish between information of the same type. For example, without departing from the scope of the embodiments of the disclosure, first information may also be called second information, and similarly, second information may also be called first information. Depending on the context, the word "if" and "in case" as used here may be interpreted as "in a case that" or "when" or "in response to a determination".

In order to better understand the method for selecting a terminal for ranging or sidelink (SL) positioning in embodiments of the disclosure, a communication system to which the embodiments of the disclosure are applicable is described below.

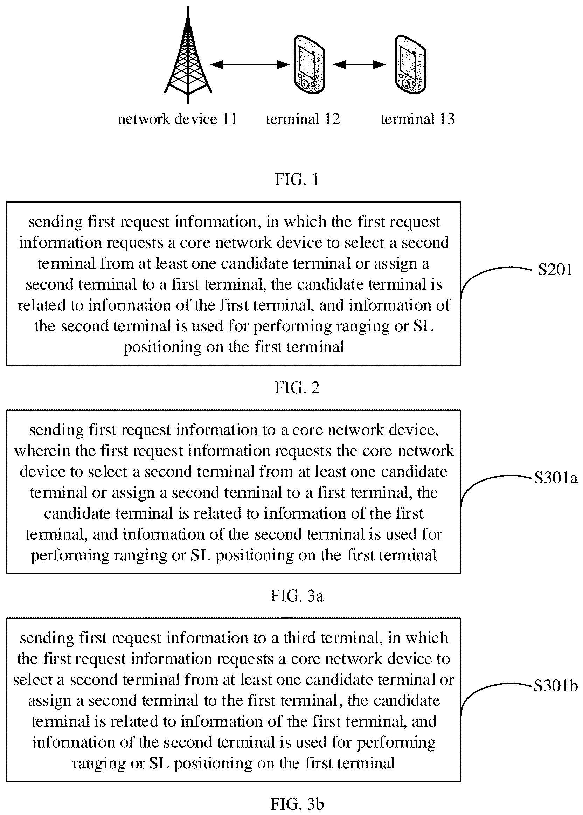

FIG. 1 is a diagram illustrating an architecture of a communication system according to an embodiment of the disclosure. The communication system may include, but is not limited to, one network device and two terminals, the terminals are connected via an SL. The number and forms of the devices illustrated in FIG. 1 are only for example and do not constitute a limitation to embodiments of the disclosure, and two or more network devices and two or more terminals may be included in practical applications. As an example, the communication system illustrated in FIG. 1 includes a network devices 11, and two terminals 12 and 13, in which the terminal 12 and the terminal 13 are connected via an SL.

In the disclosure, the terminal 12 may be a transmitting end, and the terminal 13 may be a peer terminal, in which the terminal 13 may be one or more, which is not limited in the disclosure. Alternatively, the terminal 13 may be a transmitting end, and the terminal 12 may be a peer terminal, in which the terminal 12 may be one or more, which is not limited in the disclosure.

It should to be noted that the technical solutions in embodiments of the disclosure are applicable to various communication systems, for example, a long term evolution (LTE) system, a 5th generation (5G) mobile communication system, a 5G new radio (NR) system or other future new mobile communication systems. It should also be noted that the SL in the embodiments of the disclosure may also be referred to as a side link or a direct link.

It should also be noted that the network device 11 in the embodiments of the disclosure is an entity on a network side for transmitting signals or receiving signals. The network device 11 may be a core network device or an access network device. The core network device may be, for example, a location management function (LMF) network element, an access and mobility management function (AMF) network element, a policy control function (PCF) network element, or the like. The access network device may be, for example, an evolved NodeB (eNB), a transmission reception point (TRP), a next generation NodeB (gNB) in an NR system, a base station in other future mobile communication systems, or an access node in a wireless fidelity (WiFi) system. A specific technology adopted by the network device and a specific device form adopted by the network device are not limited in embodiments of the disclosure.

The terminal in embodiments of the disclosure is an entity on a user side for receiving or transmitting a signal, for example, a mobile phone. The terminal may be referred to as a terminal device, a user equipment (UE), a mobile station (MS), a mobile terminal (MT), and the like. The terminal may be a device with a communication function, such as a vehicle, a smart vehicle, an Internet of Vehicles device, a mobile phone, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, or the like. A specific technology adopted by the terminal and a specific device form adopted by the terminal are not limited in embodiments of the disclosure.

It should be understood that the communication system described in embodiments of the disclosure is intended to explain technical solutions of embodiments of the disclosure more clearly, and does not constitute a limitation to the technical solutions provided by embodiments of the disclosure. Those skilled in the art may know that, with evolution of a system architecture and emergence of a new business scenario, the technical solutions provided by embodiments of the disclosure are also applied to similar technical problems.

The method and the apparatus for selecting a terminal for ranging or SL positioning provided by the disclosure are described in detail below with reference to the accompanying drawings. FIG. 2 is a flow chart illustrating a method for selecting a terminal for ranging or SL positioning according to an embodiment of the disclosure. The method is performed by a first terminal. The method for selecting a terminal for ranging or SL positioning in this embodiment may be applied in the first terminal. The first terminal may be, for example, a terminal to be ranged or SL positioned. The first terminal may be, for example, a mobile phone, or a device with a communication function, such as a pad, a smart watch, a smart automobile, an Internet of Vehicles device, or the like, which is not limited here.

As shown in FIG. 2, the method may include but is not limited to the following step S201.

At S201: first request information is sent, in which the first request information requests a core network device to select a second terminal from at least one candidate terminal or assign a second terminal to the first terminal, the candidate terminal is related to information of the first terminal, and information of the second terminal is used for performing the ranging or SL positioning on the first terminal.

In some embodiments, the first terminal may be, for example, a terminal to be ranged or SL positioned, which is not limited here.

In some embodiments, the second terminal refers to a terminal whose position is known or may be known and which may be used for performing the ranging or SL positioning, which is not limited here.

In some embodiments, ranging or SL positioning of the first terminal may be performed based on information of the selected and determined second terminal, which is not limited here.

In some embodiments, the first request information refers to information for requesting the core network device to select the second terminal or assign the second terminal to the first terminal, which is not limited here.

In some embodiments, the first request information may be, for example, information related to network (NW) selection of the second terminal. That is, embodiments of the disclosure support selecting an optimal located terminal with reference to the information related to the NW selection of the second terminal, which is not limited here.

In some embodiments, if ranging or SL positioning is performed on the first terminal, the first terminal may send the first request information to request the core network device to select and determine an optimal second terminal for the first terminal, which is not limited here.

In some embodiments, ranging or SL positioning may be authorized for the first terminal, and a ranging or SL positioning strategy or parameter may be allocated to the first terminal, so that the first terminal determines one or more candidate terminals, which is not limited here.

In some embodiments, the candidate terminal may refer to a candidate terminal whose position is known or may be known and which may be used for performing the ranging or SL positioning, which is not limited here.

In some embodiments, the one or more candidate terminals may be determined by the first terminal, which is not limited here.

In some embodiments, taking a UEl as the first terminal and a UE2 and a UE3 as candidate terminals as an example, the UE1 may discover the UE2 and the UE3, which is not limited here.

In some embodiments, taking a target UE1 as the first terminal and located terminals including the UE2 and the UE3 as candidate terminals as an example, which is not limited here.

In some embodiments, the target UE1 decides to obtain its own position via network-assisted SL positioning and may discover candidate located terminals, for example, the UE2 and the UE3, via PC5, which is not limited here.

In some embodiments, the first terminal may, based on the first request information, request the core network device to select an optimal candidate terminal for the first terminal. The optimal candidate terminal may be an optional example of the second terminal, which is not limited here.

In some embodiments, the first terminal may also, based on the first request information, request the core network device to assign an optimal candidate terminal to the first terminal. The optimal candidate terminal may be an optional example of the second terminal, which is not limited here.

In some embodiments, the information of the first terminal may refer to information describing an area near the first terminal. The information of the first terminal is, for example, an area where the first terminal is located, cell information serving the first terminal, or the like, which is not limited here.

In some embodiments, that the candidate terminal is related to the information of the first terminal means that the candidate terminal may be determined based on the information of the first terminal. For example, the candidate terminal is a terminal in the area where the first terminal is located that may participate in ranging or SL positioning, which is not limited here.

In some embodiments, if the core network device is able to learn of the at least one candidate terminal, the core network device may, based on the first request information from the first terminal, select the second terminal from the at least one candidate terminal. If the core network device is not able to learn of the at least one candidate terminal, the core network device may, based on the first request information, assign the second terminal to the first terminal, which is not limited here.

Thus, since the candidate terminal may be a terminal related to the information of the first terminal, and the first terminal may request the core network device to select the second terminal from the at least one candidate terminal or assign the second terminal to the first terminal, to perform ranging or SL positioning of the first terminal based on the information of the second terminal, accurate selection of a terminal for ranging or SL positioning may be achieved.

In the method for selecting a terminal for ranging or SL positioning of the disclosure, the first request information includes at least one of: quality of service (QoS) required for positioning; terminal preference; a first candidate terminal list, in which the first candidate terminal list is empty; a second candidate terminal list, in which the second candidate terminal list includes information of the at least one candidate terminal; first indication information, in which the first indication information instructs the core network device to select the second terminal; or second indication information, in which the second indication information instructs the core network device to assign the second terminal to the first terminal. This further improves the flexibility and accuracy in selecting a terminal for ranging or SL positioning.

In some embodiments, the first candidate terminal list may be empty, which may indicate that a target terminal (an optional example of the first terminal) does not discover a candidate located terminal (an optional example of a candidate terminal), and may request the network to assign a located terminal to be used (an optional example of the second terminal), in which some terminals may be assigned by the network as located terminals at a location, which is not limited here.

In some embodiments, the second candidate terminal list may include information of one or more candidate terminals. The information of the candidate terminal may be, for example, an identifier of the candidate terminal, or any information that may be used to represent the corresponding candidate terminal, which is not limited here.

In some embodiments, the information of the candidate terminal may further include at least one of: an identifier of the candidate terminal; or terminal capability information, in which the terminal capability information at least includes a positioning capability supported by the candidate terminal, which is not limited here.

In some embodiments, the identifier of the candidate terminal is used to identify the candidate terminal, which is not limited here.

In some embodiments, the terminal capability information is used to represent information related to a terminal capability possessed by the candidate terminal, which is not limited here.

In some embodiments, the terminal capability information at least includes the positioning capability supported by the candidate terminal. The terminal capability information may also include capabilities of any other possible forms, which is not limited here.

In some embodiments, the second candidate terminal list may further include information of one or more candidate terminals. The information of the candidate terminal may further include terminal capability information such as a positioning method supported by the corresponding candidate terminal, which is not limited here.

In some embodiments, the first candidate terminal list and/or the second candidate terminal list may be a new parameter, or may also reuse existing located terminal information, which is not limited here.

In some embodiments, the first indication information instructs the core network device to select the second terminal. For example, the first indication information may indicate that the first terminal requests an indication of the located UE determined by the network, which is not limited here.

In some embodiments, the QoS required for positioning may be, for example, required QoS for the location, that is, the QoS required for positioning and/or location, which is not limited here.

In some embodiments, the terminal preference may be used to describe a preference situation of the first terminal for located UEs, which is not limited here.

In some embodiments, the terminal preference may be, for example, UE preference, which is not limited here.

In some embodiments, the terminal preference may be, for example, that the UE1 prefers the UE2, or the UE1 prefers the UE3, which is not limited here.

In some embodiments, the terminal preference may also be, for example, that the terminal prefers a terminal with an established connection, or a terminal belonging to the same cell, which is not limited here.

In some embodiments, a preference standard or a preference condition may be predefined, and terminals satisfying the preference standard or the preference condition may be determined, which is not limited here.

The terminal preference may also be, for example, any other possible forms of preferences, which is not limited here.

In some embodiments, if the first request information includes the first candidate terminal list and does not include the second candidate terminal list, it may further implicitly instruct the network to assign the second terminal to the first terminal, which is not limited here.

In some embodiments, if the first request information does not include the first candidate terminal list and includes the second candidate terminal list, it may further implicitly instruct the network to select the second terminal, which is not limited here.

In some embodiments, the first request information may also directly include the second indication information, which instructs the network, based on the second indication information, to assign the second terminal to the first terminal, which is not limited here.

In some embodiments, the first indication information and the second indication information may be different indication information, or may be the same indication information, which is not limited here.

In some embodiments, if the first indication information and the second indication information are the same indication information, the core network device may be instructed, based on the same indication information, to select the second terminal and assign the second terminal to the first terminal. The strategy for determining the second terminal, such as whether to select the second terminal or assign the second terminal, may be determined based on whether the candidate terminal list carried in the first indication information is empty, which is not limited here.

In some embodiments, the network side may activate a located terminal role for a relevant terminal by updating service authorization of the relevant terminal to assign the located terminal role as the second terminal, which is not limited here.

In the method for selecting a terminal for ranging or SL positioning of the disclosure, the first terminal may, in the case that the at least one candidate terminal is determined based on the information of the first terminal, send the first request information, and request, based on the first request information, the core network device to select the second terminal from the at least one candidate terminal, so that the core network device may accurately select the second terminal for the first terminal.

In some embodiments, if the first terminal is able to discover a candidate located terminal (an optional example of a candidate terminal), the second candidate terminal list may be configured based on information of the candidate located terminal, and the second candidate terminal list may be included in the first request information and sent to the core network device to instruct the core network device to select the second terminal from the at least one candidate terminal, which is not limited here.

In some embodiments, if the first terminal is able to discover a candidate located terminal (an optional example of a candidate terminal), information of the candidate located terminal may be configured into the second candidate terminal list, and the second candidate terminal list and the first indication information for instructing the core network device to select the second terminal may be included in the first request information and sent to the core network device to instruct the core network device to select the second terminal from the at least one candidate terminal, which is not limited here.

In the method for selecting a terminal for ranging or SL positioning of the disclosure, the first terminal may, in the case that the candidate terminal is not determined based on the information of the first terminal, send the first request information, and request, based on the first request information, the core network device to assign the second terminal to the first terminal, so that the core network device may accurately assign the second terminal to the first terminal.

In some embodiments, if the first terminal fails to discover a candidate located terminal (an optional example of a candidate terminal), the first candidate terminal list (which is empty) may be configured, and the first candidate terminal list (which is empty) may be included in the first request information and sent to the core network device to instruct the core network device to assign the second terminal, which is not limited here.

In some embodiments, if the first terminal fails to discover a candidate located terminal (an optional example of a candidate terminal), the first candidate terminal list (which is empty) may be configured, and the first candidate terminal list (which is empty) and the second indication information for instructing the core network device to assign the second terminal may be included in the first request information and sent to the core network device to instruct the core network device to assign the second terminal, which is not limited here.

FIG. 3a is a flow chart illustrating a method for selecting a terminal for ranging or SL positioning according to an embodiment of the disclosure. The method is performed by a first terminal.

As shown in FIG. 3a, the method may include but is not limited to the following step S301a.

At S301a: first request information is sent to a core network device, in which the first request information requests the core network device to select a second terminal from at least one candidate terminal or assign a second terminal to the first terminal, the candidate terminal is related to information of the first terminal, and information of the second terminal is used for performing the ranging or SL positioning on the first terminal.

This embodiment may be applied in a scenario where a non-access stratum (NAS) connection between the first terminal and a network is available, which is not limited here.

In some embodiments, the scenario may be, for example, that an NAS connection between a target terminal (UE1) and the network is available, which is not limited here.

In some embodiments, the first terminal may directly send the first request information to the core network device to request selection or assignment of the second terminal, which is not limited here.

In some embodiments, the core network device is, for example, an AMF network element and/or an LMF network element, which is not limited here.

In some embodiments, the first terminal may send at least one of QoS required for positioning, terminal preference, a first candidate terminal list, a second candidate terminal list, first indication information, or second indication information to the AMF network element and/or the LMF network element, to request the AMF network element and/or the LMF network element to determine an optimal second terminal based on at least one of the above types of information, which is not limited here.

In some embodiments, the first request information may be carried in a mobile originated-location request (MO-LR) ranging/SL positioning service request message. The MO-LR ranging/SL positioning service request message may be sent to the core network device, so that the core network device may parse the first request information from the MO-LR ranging/SL positioning service request message, which is not limited here.

In some embodiments, MO-LR represents mobile originated location request, which is not limited here.

Thus, the first terminal may send the first request information to the core network device, in which the first request information requests the core network device to select the second terminal from the at least one candidate terminal or assign the second terminal to the first terminal. The candidate terminal is related to the information of the first terminal, and the information of the second terminal is used for performing the ranging or SL positioning on the first terminal, which may be effectively applied in the scenario where the NAS connection between the first terminal and the network is available and may improve the flexibility and accuracy in selecting a terminal for ranging or SL positioning.

FIG. 3b is a flow chart illustrating a method for selecting a terminal for ranging or SL positioning according to an embodiment of the disclosure. The method is performed by a first terminal.

As shown in FIG. 3b, the method may include but is not limited to the following step S301b.

S301b: first request information is sent to a third terminal, in which the first request information requests a core network device to select a second terminal from at least one candidate terminal or assign a second terminal to the first terminal, the candidate terminal is related to information of the first terminal, and information of the second terminal is used for performing the ranging or SL positioning on the first terminal.

This embodiment may be applied in a scenario where an NAS connection between the first terminal and a network is available, which is not limited here.

In some embodiments, the scenario may be, for example, that an NAS connection between a target terminal (UE1) and the network is available, which is not limited here.

In some embodiments, the first terminal may send the first request information to the third terminal to request the third terminal to send the first request information to the core network device, which is not limited here.

In the embodiments of the disclosure, the first request information is sent by the third terminal; "sending" may specifically be, for example, directly forwarding or reconstructed sending, which is not limited here.

In the method for selecting a terminal for ranging or SL positioning of the disclosure, the third terminal includes at least one of: a candidate terminal, in which an NAS connection between the candidate terminal and the core network device is available; or a UE to network relay, thus effectively improving the forwarding success rate of the first request information.

In some embodiments, the third terminal may be any one of one or more candidate terminals, and the NAS connection between the third terminal and the core network device is available, or the third terminal is the UE to network relay, which is not limited here.

In some embodiments, the core network device is, for example, an AMF network element and/or an LMF network element, which is not limited here.

In some embodiments, the first terminal may send the first request information to the third terminal to trigger the third terminal to send (directly forward or reconstructed send) at least one of QoS required for positioning, terminal preference, a first candidate terminal list, a second candidate terminal list, first indication information, or second indication information to the AMF network element and/or the LMF network element, to request the AMF network element and/or the LMF network element to determine an optimal second terminal based on at least one of the above types of information, which is not limited here.

In some embodiments, an NAS connection between a target terminal UE1 (an optional example of the first terminal) and the network is unavailable. Interaction between the target terminal and the network may be completed via the UE to network relay or one of located terminals with an NAS connection (an optional example of the third terminal), which is not limited here.

In some embodiments, the target terminal first interacts with the network via a located UE2 (located terminal 2, which may be an optional example of the third terminal). Based on a determination result of the network, if the UE2 is not selected as the located terminal (for example, the UE2 is not selected as the optimal second terminal), the target terminal may use a selected optimal second terminal (for example, located terminal 3, located UE3) for ranging or SL positioning, which is not limited here.

In some embodiments, a message transmitted between the UE1 (an optional example of the first terminal) and the UE2 (an optional example of the third terminal) may be, for example, a specific PC5 message for requesting network-assisted SL positioning, or an MO-LR message for location service (LCS), or an enhanced MO-LR message for enhanced LCS (eLCS), which is not limited here.

Thus, the first terminal may send the first request information to the third terminal to trigger the third terminal to send the first request information to the AMF network element and/or the LMF network element, in which the first request information requests the core network device to select the second terminal from the at least one candidate terminal or assign the second terminal to the first terminal. The candidate terminal is related to the information of the first terminal, and the information of the second terminal is used for performing the ranging or SL positioning on the first terminal, which may be effectively applied in the scenario where the NAS connection between the first terminal and the network is unavailable and may improve the flexibility and accuracy in selecting a terminal for ranging or SL positioning.

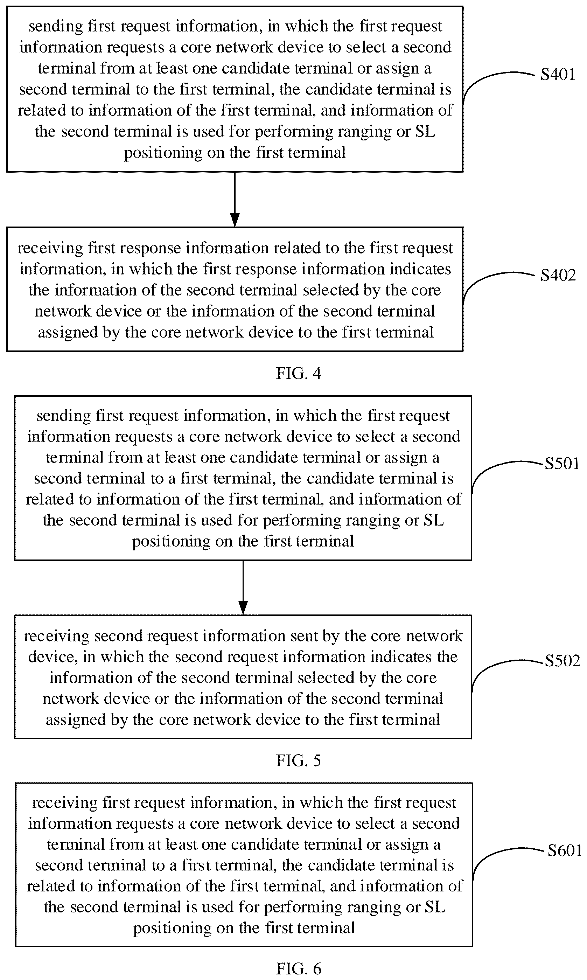

FIG. 4 is a flow chart illustrating another method for selecting a terminal for ranging or SL positioning according to an embodiment of the disclosure. The method is performed by a first terminal.

As shown in FIG. 4, the method may include but is not limited to the following steps S401 to S402.

At S401: first request information is sent, in which the first request information requests a core network device to select a second terminal from at least one candidate terminal or assign a second terminal to the first terminal, the candidate terminal is related to information of the first terminal, and information of the second terminal is used for performing the ranging or SL positioning on the first terminal.

At S402: first response information related to the first request information is received, in which the first response information indicates the information of the second terminal selected by the core network device or the information of the second terminal assigned by the core network device to the first terminal.

In some embodiments, the first response information may be generated in response to the first request information, which is not limited here.

In some embodiments, the first response information may indicate the information of the second terminal selected by the core network device or the information of the second terminal assigned by the core network device to the first terminal, which is not limited here.

In some embodiments, the information of the second terminal may be, for example, information for identifying the second terminal, or may also include position information of the second terminal, ranging information (distance and/or direction) between the first terminal and the second terminal, or the like, which is not limited here.

In some embodiments, the information of the second terminal may be determined by an AMF network element and/or an LMF network element, which is not limited here.

In some embodiments, the AMF network element and/or the LMF network element may determine a selected second terminal or an assigned second terminal and send the information of the second terminal to the first terminal, which is not limited here.

In some embodiments, the information of the second terminal is used for performing the ranging or SL positioning on the first terminal, which is not limited here.

In some embodiments, the first response information may be carried in an MO-LR ranging/SL positioning service response message. The MO-LR ranging/SL positioning service response message may be sent to the first terminal, so that the first terminal may parse the first response information from the MO-LR ranging/SL positioning service response message, which is not limited here.

In some embodiments, MO-LR represents mobile originated location request, which is not limited here.

Thus, the first terminal may further receive information indicating the second terminal selected by the core network device or the second terminal assigned by the core network device to the first terminal, so as to timely learn the information of the second terminal for ranging or SL positioning.

In the method for selecting a terminal for ranging or SL positioning of the disclosure, the first terminal may receive the first response information sent by the core network device, which is applicable in a scenario where an NAS connection between the first terminal and the network is available and may improve the flexibility and accuracy in selecting a terminal for ranging or SL positioning.

In some embodiments, the first terminal may receive information of the second terminal forwarded by the AMF network element. The information of the second terminal may be selected or assigned by the LMF network element, which is not limited here.

In some embodiments, the LMF network element sends the selected or assigned located UE (an optional example of the second terminal) to a UE1 (an optional example of the first terminal) via the AMF network element, which is not limited here.

In some embodiments, the first terminal may also receive the selected or assigned located UE (an optional example of the second terminal) sent by the LMF network element, which is not limited here.

In some embodiments, the first terminal may also receive the first response information sent (directly forwarded or reconstructed sent) by a third terminal, which may be effectively applied in a scenario where an NAS connection between the first terminal and the network is unavailable and may improve the flexibility and accuracy in selecting a terminal for ranging or SL positioning.

In the method for selecting a terminal for ranging or SL positioning of the disclosure, the third terminal includes at least one of: a candidate terminal, in which an NAS connection between the candidate terminal and the core network device is available; or a UE to network relay, thus effectively improving the forwarding success rate of the first request information.

In some embodiments, the third terminal may be any one of one or more candidate terminals, and the NAS connection between the third terminal and the core network device is available, or the third terminal is the UE to network relay, which is not limited here.

FIG. 5 is a flow chart illustrating another method for selecting a terminal for ranging or SL positioning according to an embodiment of the disclosure. The method is performed by a first terminal.

As shown in FIG. 5, the method may include but is not limited to the following steps S501 to S502.

At S501: first request information is sent, in which the first request information requests a core network device to select a second terminal from at least one candidate terminal or assign a second terminal to the first terminal, the candidate terminal is related to information of the first terminal, and information of the second terminal is used for performing the ranging or SL positioning on the first terminal.

At S502: second request information sent by the core network device is received, in which the second request information indicates the information of the second terminal selected by the core network device or the information of the second terminal assigned by the core network device to the first terminal.

In some embodiments, the first terminal may directly receive the second request information sent by the core network device to clarify the information of the second terminal selected by the core network device or the information of the second terminal assigned to the first terminal, which is not limited here.

In some embodiments, the core network device may select or assign the second terminal. After the core network device selects or assigns the second terminal, the core network device may inform the first terminal of the information of the second terminal the core network device selected or assigned, which is not limited here.

In some embodiments, after clarifying that the second terminal is selected as the located terminal, the first terminal may further, in response to triggering from the network, determine ranging information (distance and/or direction) between a UE1 (an optional example of the first terminal) and a selected located UE (the second terminal) to perform ranging or SL positioning, which is not limited here.

Thus, the first terminal may further receive the second request information sent by the core network device, and clarify the information of the second terminal selected by the core network device or the information of the second terminal assigned to the first terminal based on the second request information, thus effectively improving the indication flexibility of the information of the second terminal, making the information suitable for personalized positioning scenarios, and improving the flexibility and accuracy in selecting a terminal for ranging or SL positioning.

It should be noted that, in the following embodiments, for descriptions of terms and method steps that are the same as or correspond to those in the above embodiments reference may be made to the above embodiments, and details are not repeated here.

FIG. 6 is a flow chart illustrating another method for selecting a terminal for ranging or SL positioning according to an embodiment of the disclosure. The method is performed by a core network device.

As shown in FIG. 6, the method may include but is not limited to the following step S601.

At S601: first request information is received, in which the first request information requests the core network device to select a second terminal from at least one candidate terminal or assign a second terminal to a first terminal, the candidate terminal is related to information of the first terminal, and information of the second terminal is used for performing the ranging or SL positioning on the first terminal.

In some embodiments, the first request information refers to information for requesting to select the second terminal or assign the second terminal to the first terminal, which is not limited here.

In some embodiments, the first request information may be, for example, information related to NW selection of the second terminal. That is, embodiments of the disclosure support selecting an optimal located terminal with reference to information related to the NW selection of the second terminal, which is not limited here.

In some embodiments, if ranging or SL positioning is performed on the first terminal, the first terminal may send the first request information, and the core network device may receive the first request information to select and determine an optimal second terminal for the first terminal based on the first request information, which is not limited here.

In some embodiments, ranging or SL positioning may be authorized for the first terminal, and a ranging or SL positioning strategy or parameter may be allocated to the first terminal, so that the first terminal determines one or more candidate terminals, which is not limited here.

In some embodiments, the core network device may select an optimal candidate terminal from the one or more candidate terminals determined by the first terminal as the second terminal, which is not limited here.

In some embodiments, the candidate terminal may refer to a candidate terminal whose position is known or may be known and which may be used for the ranging or SL positioning, which is not limited here.

In some embodiments, the one or more candidate terminals may be determined by the first terminal, which is not limited here.

In some embodiments, if the first terminal fails to discover a candidate terminal, the first terminal may request the core network device to assign the second terminal; then the core network device may, based on the first request information from the first terminal, assign a second terminal to the first terminal, which is not limited here.

In some embodiments, the core network device may be, for example, an LMF network element. The LMF network element may select or assign the second terminal for the first terminal, which is not limited here.

In some embodiments, the LMF network element may send a selected or assigned located UE (an optional example of the second terminal) to a UE1 (an optional example of the first terminal) via the AMF network element, which is not limited here.

In some embodiments, the LMF network element may directly send the selected or assigned located UE (an optional example of the second terminal) to the UE1 (an optional example of the first terminal), which is not limited here.

In some embodiments, the core network device may be, for example, an AMF network element. The AMF network element may select or assign the second terminal for the first terminal, which is not limited here.

In some embodiments, the AMF network element may directly send the selected or assigned located UE (an optional example of the second terminal) to the UE1 (an optional example of the first terminal), which is not limited here.

Thus, in this embodiment, the core network device may receive the first request information, in which the first request information requests the core network device to select the second terminal from the at least one candidate terminal or assign the second terminal to the first terminal, the candidate terminal is related to information of the first terminal, and the information of the second terminal is used for performing the ranging or SL positioning on the first terminal, thus achieving the accurate selection of a terminal for ranging or SL positioning.

In the method for selecting a terminal for ranging or SL positioning of the disclosure, the core network device may receive the first request information sent by the first terminal, which is applicable in a scenario where an NAS connection between the first terminal and the network is available and may improve the flexibility and accuracy in selecting a terminal for ranging or SL positioning.

In some embodiments, if the NAS connection between the first terminal and the network is available, and the first terminal directly sends the first request information to the core network device, the core network device may receive the first request information sent by the first terminal, which is not limited here.

In the method for selecting a terminal for ranging or SL positioning of the disclosure, the core network device may receive the first request information sent by a third terminal, which is applicable in a scenario where an NAS connection between the first terminal and the network is unavailable and may improve the flexibility and accuracy in selecting a terminal for ranging or SL positioning.

In some embodiments, the first terminal may send the first request information to the third terminal to trigger the third terminal to send at least one of QoS required for positioning, terminal preference, a first candidate terminal list, a second candidate terminal list, first indication information, or second indication information to the AMF network element and/or the LMF network element, to request the AMF network element and/or the LMF network element to determine an optimal second terminal based on at least one of the above types of information, which is not limited here.

In some embodiments, the AMF network element and/or the LMF network element may receive the at least one of the QoS required for positioning, the terminal preference, the first candidate terminal list, the second candidate terminal list, the first indication information, or the second indication information sent by the third terminal, to determine the optimal second terminal based on at least one of the above types of information, which is not limited here.

In the method for selecting a terminal for ranging or SL positioning of the disclosure, the third terminal includes at least one of: a candidate terminal, in which an NAS connection between the candidate terminal and the core network device is available; or a UE to network relay, thus effectively improving the forwarding success rate of the first request information.

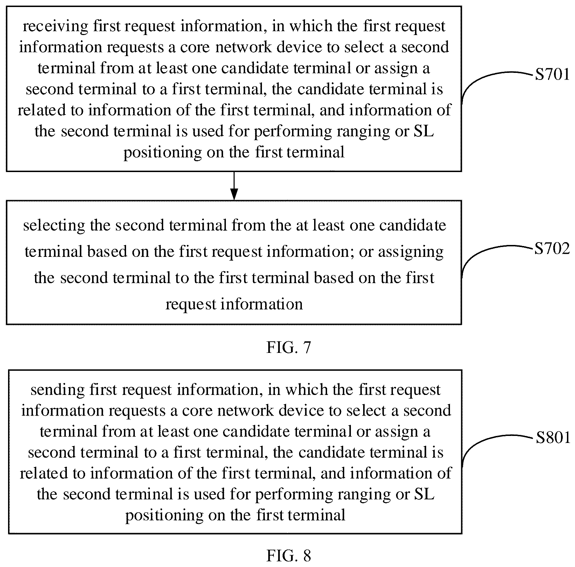

FIG. 7 is a flow chart illustrating another method for selecting a terminal for ranging or SL positioning according to an embodiment of the disclosure. The method is performed by a core network device.

As shown in FIG. 7, the method may include but is not limited to the following steps S701 to S702.

At S701: first request information is received, in which the first request information requests the core network device to select a second terminal from at least one candidate terminal or assign a second terminal to a first terminal, the candidate terminal is related to information of the first terminal, and information of the second terminal is used for performing the ranging or SL positioning on the first terminal.

At S702: the second terminal is selected from the at least one candidate terminal based on the first request information; or the second terminal is assigned to the first terminal based on the first request information.

In some embodiments, the core network device may, based on content indicated by the first request information, select the second terminal from the at least one candidate terminal or assign the second terminal to the first terminal, which is not limited here.

In some embodiments, an AMF network element and/or an LMF network element may, based on the content indicated by the first request information, select the second terminal from the at least one candidate terminal or assign the second terminal to the first terminal, which is not limited here.

In some embodiments, the AMF network element and/or the LMF network element may further collaborate with a next generation radio access network (NG-RAN) to select or assign the second terminal, which is not limited here.

In some embodiments, the first request information may be, for example, information related to NW selection of the second terminal. That is, embodiments of the disclosure support selecting an optimal located terminal with reference to the information related to the NW selection of the second terminal, which is not limited here.

In some embodiments, the AMF network element and/or the LMF network element may, based on a received candidate located terminal (an optional example of a candidate terminal) of a target UE1 (an optional example of the first terminal), then, based on an area of interest, position information and related capabilities, configuration information of the terminal, terminal preference, and/or QoS required for positioning, determine an optimal located terminal (an optional example of the second terminal) for network-assisted SL positioning. When performing terminal determination, the core network device may also consider other information available to the core network, for example, network connection status of relevant terminals, and select a terminal with an existing connection to reduce system overhead while meeting a service requirement, which is not limited here.

In some embodiments, determining the optimal located terminal for network-assisted SL positioning may be selecting an optimal candidate terminal from one or more candidate terminals as the optimal located terminal in combination with content of the first request information mentioned above, which is not limited here.

In some embodiments, determining the optimal located terminal for network-assisted SL positioning may also be assigning an optimal candidate terminal to the first terminal as the optimal located terminal in combination with the content of the first request information mentioned above, which is not limited here.

Thus, the core network device receives the first request information, in which the first request information requests the core network device to select the second terminal from the at least one candidate terminal or assign the second terminal to the first terminal, the candidate terminal is related to information of the first terminal, and the information of the second terminal is used for performing the ranging or SL positioning on the first terminal, and selects the second terminal from the at least one candidate terminal based on the first request information, or assigns the second terminal to the first terminal based on the first request information, thus further achieving the accurate selection of a terminal for ranging or SL positioning.

In the method for selecting a terminal for ranging or SL positioning of the disclosure, the core network device may send first response information related to the first request information, in which the first response information indicates the information of the second terminal selected by the core network device or the information of the second terminal assigned by the core network device to the first terminal, achieving timely and effective indication of the information of the selected or assigned second terminal.

In the method for selecting a terminal for ranging or SL positioning of the disclosure, the core network device may send the first response information related to the first request information to the first terminal, which is applicable in a scenario where an NAS connection between the first terminal and the network is available and may improve the flexibility and accuracy in indicating the information of the second terminal.

In some embodiments, the AMF network element may forward the information of the second terminal to the first terminal. The information of the second terminal may be selected or assigned by the LMF network element, which is not limited here.

In some embodiments, the LMF network element may send a selected or assigned located UE (an optional example of the second terminal) to a UE1 (an optional example of the first terminal) via the AMF network element, which is not limited here.

In some embodiments, the LMF network element may send the selected or assigned located UE (an optional example of the second terminal) to the first terminal, which is not limited here.

In some embodiments, the third terminal may also send the first response information to the first terminal. The third terminal may receive the first response information determined and sent by the core network device, which may be effectively applied in a scenario where an NAS connection between the first terminal and the network is unavailable and may improve the flexibility and accuracy in indicating the information of the second terminal.

In the method for selecting a terminal for ranging or SL positioning of the disclosure, the third terminal includes at least one of: a candidate terminal, in which an NAS connection between the candidate terminal and the core network device is available; or a UE to network relay, thus effectively improving the forwarding success rate of the first request information.

In some embodiments, the third terminal may be any one of one or more candidate terminals, and the NAS connection between the third terminal and the core network device is available, or the third terminal is the UE to network relay, which is not limited here.

In the method for selecting a terminal for ranging or SL positioning of the disclosure, the core network device may send second request information to the first terminal, in which the second request information indicates the information of the second terminal selected by the core network device or the information of the second terminal assigned by the core network device to the first terminal, thus effectively improving the indication flexibility of the information of the second terminal, making the information suitable for personalized positioning scenarios, and improving the flexibility and accuracy in selecting a terminal for ranging or SL positioning.

In some embodiments, the core network device may send the second request information to the first terminal. After clarifying that the second terminal is selected as the located terminal, the first terminal may also, in response to triggering from the network, determine ranging information (distance and/or direction) between the UE1 (an optional example of the first terminal) and the selected located UE (the second terminal) to perform ranging or SL positioning, which is not limited here.

FIG. 8 is a flow chart illustrating another method for selecting a terminal for ranging or SL positioning according to an embodiment of the disclosure. The method is performed by a third terminal.

As shown in FIG. 8, the method may include but is not limited to the following step S801.

At S801: first request information is sent, in which the first request information requests a core network device to select a second terminal from at least one candidate terminal or assign a second terminal to the first terminal, the candidate terminal is related to information of the first terminal, and information of the second terminal is used for performing the ranging or SL positioning on the first terminal.

In the method for selecting a terminal for ranging or SL positioning of the disclosure, the third terminal includes at least one of: a candidate terminal, in which an NAS connection between the candidate terminal and the core network device is available; or a UE to network relay, thereby effectively improving the forwarding success rate of the first request information.

In some embodiments, the third terminal may be any one of one or more candidate terminals, and the NAS connection between the third terminal and the core network device is available, or the third terminal is the UE to network relay, which is not limited here.

In some embodiments, the third terminal may receive the first request information sent by the first terminal and forward the first request information to the core network device, which is not limited here.

In some embodiments, the third terminal may carry the first request information in an MO-LR ranging/SL positioning service request message and send the MO-LR ranging/SL positioning service request message to the core network device, so that the core network device may parse the first request information from the MO-LR ranging/SL positioning service request message, which is not limited here.

In some embodiments, MO-LR represents mobile originated location request, which is not limited here.

In some embodiments, a message transmitted between a UE1 (an optional example of the first terminal) and a UE2 (an optional example of the third terminal) may be, for example, a specific PC5 message for requesting network-assisted SL positioning, or an MO-LR message for LCS, or an enhanced MO-LR message for eLCS, which is not limited here.

In some embodiments, the UE1 may carry the first request information in the above message and send the message to the UE2. The UE2 may carry the first request information in the MO-LR ranging/SL positioning service request message and send the message to the core network device, which is not limited here.

Thus, the third terminal may send the first request information, in which the first request information requests the core network device to select the second terminal from the at least one candidate terminal or assign the second terminal to the first terminal, the candidate terminal is related to the information of the first terminal, and the information of the second terminal is used for performing the ranging or SL positioning on the first terminal, thus achieving the accurate selection of a terminal for ranging or SL positioning.

In the method for selecting a terminal for ranging or SL positioning of the disclosure, the third terminal may receive the first request information sent by the first terminal and send the received first request information to the core network device, which may be effectively applied in a scenario where an NAS connection between the first terminal and a network is unavailable and may improve the flexibility and accuracy in selecting a terminal for ranging or SL positioning.

In the method for selecting a terminal for ranging or SL positioning of the disclosure, the third terminal may send first response information related to the first request information to the first terminal, in which the first response information indicates the information of the second terminal selected by the core network device or the information of the second terminal assigned by the core network device to the first terminal, which may be effectively applied in a scenario where the NAS connection between the first terminal and the network is unavailable and may improve the flexibility and accuracy in indicating the information of the second terminal.

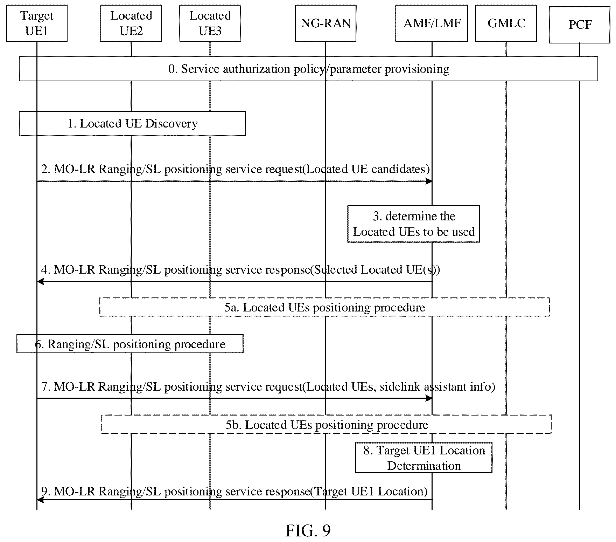

FIG. 9 is a flow chart illustrating yet another method for selecting a terminal for ranging or SL positioning according to an embodiment of the disclosure. The embodiment shown in FIG. 9 illustrates an interaction diagram between a first terminal, a second terminal, a third terminal, and a core network device, which is not limited here.

In this embodiment, a terminal with an available NAS connection is positioned via network-assisted SL positioning (an optional example of the first terminal), which is not limited here.

In this embodiment, an NAS connection between a target terminal (UE1 is an optional example of the first terminal) and a network is available; and interaction between the target terminal and the network is directly completed by the target terminal in the following process.

As shown in FIG. 9, the method may include but is not limited to the following steps.

### 0. Service authorization policy/parameter provisioning.

In some embodiments, this step may be, for example, service authorization policy/parameter provisioning, which is not limited here.

In some embodiments, this step may be implemented in collaboration with a PCF and an AMF network element, which is not limited here.

### 1. Located UE discovery.

In some embodiments, a located terminal is discovered, in which the located terminal is an optional example of a candidate terminal, which is not limited here.

In some embodiments, a target UE1 may discover a located UE2 and a located UE3. The target UE1 is an optional example of the first terminal, and the located UE2 and the located UE3 are optional examples of candidate terminals, which are not limited here.

### 2. MO-LR Ranging/SL positioning service request (located UE candidates).

In some embodiments, the target UE1 sends an MO-LR ranging/SL positioning service request message, which may indicate a candidate located UE (an optional example of candidate terminals), which is not limited here.

### 3. Determine the Located UEs to be used.

In some embodiments, the AMF/LMF determines the located terminal to be used (an optional example of the second terminal), which is not limited here.

### 4. MO-LR Ranging/SL positioning service response (Selected located UE).

In some embodiments, the AMF/LMF sends an MO-LR ranging/SL positioning service response message, which may indicate a selected located terminal (an optional example of the second terminal), which is not limited here.

### 5a. Located UEs positioning procedure.

In some embodiments, a positioning procedure based on located terminals (located UEs).

In some embodiments, position information of the selected located terminal may be obtained via an existing mechanism, which is not limited here.

In some embodiments, the position information of the selected located terminal may be obtained, for example, via a mobile terminating location request (MT_LR) procedure, which is not limited here.

In some embodiments, this step may be executed immediately after determining the located terminal, which is not limited here.

### 6. Ranging/SL positioning procedure.

In some embodiments, a ranging/SL positioning procedure may be performed, which is not limited here.

In some embodiments, the target UE1 may perform ranging/SL positioning with located terminals (located UE2 and located UE3), for example, using long term evolution positioning protocol (LPP) or SL positioning protocol (SLPP) for measurement and result calculation, which is not limited here.

### 7. MO-LR Ranging/SL positioning service request (located UEs, SL assistant info).

In some embodiments, the target UE1 may initiate an MO-LR procedure to request NW-assisted ranging/SL processing. The request may include ranging/SL positioning assistance data obtained in step 6 and related located terminal information (for example, 5G globally unique temporary UE identity (GUTI)), which is not limited here.

### 5b. Located UEs positioning procedure.

In some embodiments, a positioning procedure for located terminals (located UEs) may be executed after obtaining SL assistance information between the UE1 and the located terminals.

### 8. Target UE1 location determination.

In some embodiments, position information of the target UE1 may be determined, which is not limited here.

In some embodiments, the LMF determines the position of the target UE1 based on the ranging/SL positioning assistance data and position information of the located terminals (located UEs) obtained in step 5a or 5b, which is not limited here.

### 9. MO-LR Ranging/SL positioning service response (target UE location).

In some embodiments, the position information of the target UE1 is sent to the target UE1 via the MO-LR ranging/SL positioning service response message, which is not limited here.

In the above step 2 or step 4, the interaction between the target UE1 requesting determination of located terminals (located UEs) and the LMF may be implemented via an MO-LR procedure with specific parameters, or may be implemented via a specific procedure for requesting determination of located terminals (located UEs), which is not limited here.

In some embodiments, after determining the located terminals, the network may also send a request message to trigger the target UE1 to determine ranging information (distance and/or direction) between the target UE1 and the selected located terminals (located UEs). The target UE performs ranging/SL positioning with the located terminals (located UEs) and responds to the network with related information. After the core network determines the position information of the target UE1 in step 8 above based on ranging/SL positioning assistance data and position information of the located terminals (located UEs), the position information of the target UE1 is sent to the target UE1 as a response to the request in step 2 above, which is not limited here.

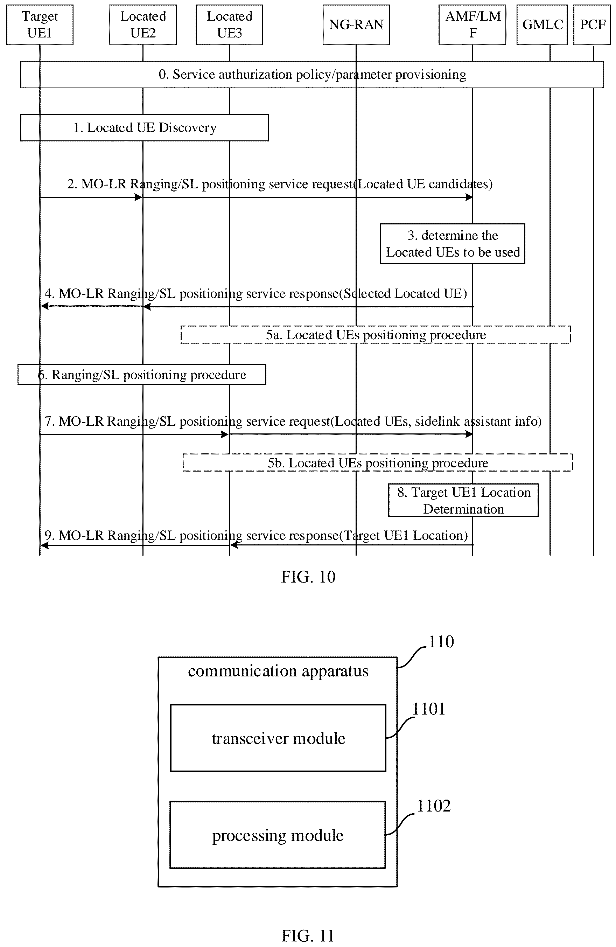

FIG. 10 is a flow chart illustrating yet another method for selecting a terminal for ranging or SL positioning according to an embodiment of the disclosure. The embodiment shown in FIG. 10 illustrates an interaction diagram between a first terminal, a second terminal, a third terminal, and a core network device, which is not limited here.

In this embodiment, a terminal with an unavailable NAS connection is positioned via network-assisted SL positioning (an optional example of the first terminal), which is not limited here.

In this embodiment, an NAS connection between a target terminal (UE1 is an optional example of the first terminal, for example, a target UE1) and a network is unavailable; interaction between the target terminal and the network is completed via a UE to network relay or one of located terminals with an NAS connection (an optional example of the third terminal). The target terminal first interacts with the network via a located UE2 (an optional example of the third terminal). Based on a determination result of the network, if the located UE2 is not selected as the located terminal, a located UE3 may be used subsequently for ranging or SL positioning, which is not limited here.

As shown in FIG. 10, the method may include but is not limited to the following steps.

### 0. Service authorization policy/parameter provisioning.

### 1. Located UE discovery.

### 2. MO-LR Ranging/SL positioning service request (located UE candidates).

In some embodiments, a target UE1 sends an MO-LR ranging/SL positioning service request message to a located UE2. The located UE2 sends an MO-LR ranging/SL positioning service request message to an AMF/LMF, which may indicate candidate located UEs (an optional example of candidate terminals). Interaction between the target UE1 and the located UE2 is conducted over a PC5 interface using a protocol supporting a ranging/SL positioning service. Interface between the located UE2 and an AMF is conducted over an N1 interface using an NAS protocol, which is not limited here.

### 3. Determine the located UEs to be used.

### 4. MO-LR Ranging/SL positioning service response (selected located UE).

In some embodiments, the AMF/LMF sends an MO-LR ranging/SL positioning service response message to the located UE2. The located UE2 sends an MO-LR ranging/SL positioning service response message to the target UE1, which may indicate a selected located terminal (an optional example of the second terminal), which is not limited here.

### 5a. Located UEs positioning procedure.

### 6. Ranging/SL positioning procedure.

### 7. MO-LR ranging/SL positioning service request (located UEs, SL assistant info).

In some embodiments, the target UE1 may initiate an MO-LR procedure to request NW-assisted ranging/SL processing. The request may include ranging/SL positioning assistance data obtained in step 6 and related located terminal information (for example, 5G GUTI), which is not limited here.

In some embodiments, the target UE1 sends the MO-LR ranging/SL positioning service request message to the located UE3. The located UE3 sends (for example, directly forwards or reconstructed sends) the MO-LR ranging/SL positioning service request message to the AMF/LMF, which may indicate ranging/SL positioning assistance data, which is not limited here.

### 5b. Located UEs positioning procedure.

### 8. Target UE1 location determination.

### 9. MO-LR ranging/SL positioning service response (target UE location).

In some embodiments, the AMF/LMF sends an MO-LR ranging/SL positioning service response message to the located UE3. The located UE3 sends the MO-LR ranging/SL positioning service response message to the target UE1, which may indicate a location of the target UE1, which is not limited here.

In some embodiments, for an alternative way that the network initiates a procedure for retrieving ranging information (distance and/or direction) between the target UE and the selected located UE(s), interaction is sent to the selected located UE(s) (e.g. located UE3) on behalf of the target UE, which is not limited here.

FIG. 11 is a block diagram illustrating a communication apparatus 110 according to an embodiment of the disclosure. The apparatus 110 illustrating in FIG. 11 may include a transceiver module 1101 and a processing module 1102. The transceiver module 1101 may include a transmitting module and/or a receiving module, the transmitting module is for realizing a transmitting function, and the receiving module is for realizing a receiving function, and the transceiver module may realize the transmitting function and/or the receiving function.

The communication apparatus 110 may be a network device (such as the core network device in the above method embodiments), an apparatus in the network device, or an apparatus that may be used in conjunction with the network device. The communication apparatus 110 may also be a terminal (such as the first terminal or the third terminal in the above method embodiments), an apparatus in the terminal, or an apparatus that may be used in conjunction with the terminal.

In the case that the apparatus 110 is configured on the first terminal side, the apparatus 110 may include a transceiver module 1101.

The transceiver module 1101 is configured to send first request information, in which the first request information requests a core network device to select a second terminal from at least one candidate terminal or assign a second terminal to the first terminal, the candidate terminal is related to information of the first terminal, and information of the second terminal is used for performing the ranging or SL positioning on the first terminal.

In this embodiment, since the candidate terminal may be a terminal related to the information of the first terminal, and the first terminal may request the core network device to select the second terminal from the at least one candidate terminal or assign the second terminal to the first terminal, to perform ranging or SL positioning of the first terminal based on the information of the second terminal, accurate selection of a terminal for ranging or SL positioning may be achieved.

In the case that the apparatus 110 is configured on the core network device side, the apparatus 110 may include a transceiver module 1101.

The transceiver module 1101 is configured to receive first request information, in which the first request information requests the core network device to select a second terminal from at least one candidate terminal or assign a second terminal to a first terminal, the candidate terminal is related to information of the first terminal, and information of the second terminal is used for performing the ranging or SL positioning on the first terminal.

In this embodiment, the core network device may receive the first request information, in which the first request information requests the core network device to select the second terminal from the at least one candidate terminal or assign the second terminal to the first terminal. The candidate terminal is related to information of the first terminal, and the information of the second terminal is used for performing the ranging or SL positioning on the first terminal, thus achieving the accurate selection of a terminal for ranging or SL positioning.

In the case that the apparatus 110 is configured on the third terminal side, the apparatus 110 may include a transceiver module 1101.

The transceiver module 1101 is configured to send first request information, in which the first request information requests a core network device to select a second terminal from at least one candidate terminal or assign a second terminal to the first terminal, the candidate terminal is related to information of the first terminal, and information of the second terminal is used for performing the ranging or SL positioning on the first terminal.

In this embodiment, the third terminal may send the first request information, in which the first request information requests the core network device to select the second terminal from the at least one candidate terminal or assign the second terminal to the first terminal. The candidate terminal is related to the information of the first terminal, and the information of the second terminal is used for performing the ranging or SL positioning on the first terminal, thus achieving the accurate selection of a terminal for ranging or SL positioning.

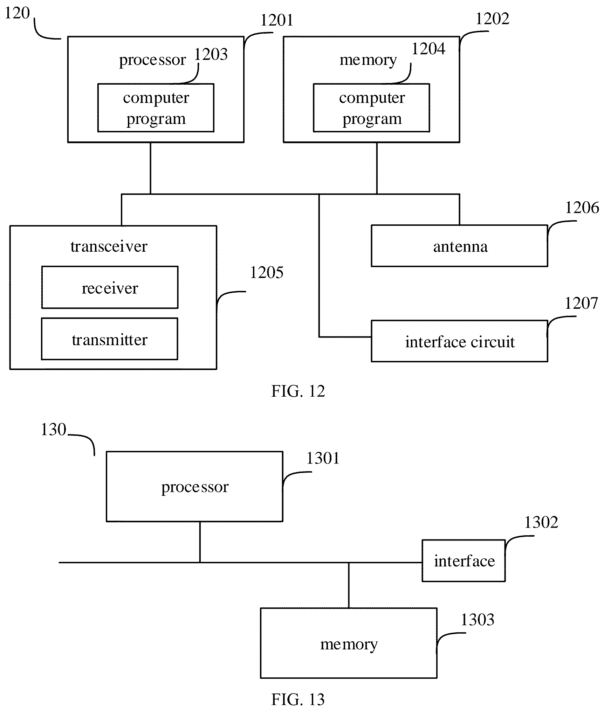

FIG. 12 is a block diagram illustrating another communication device 120 according to an embodiment of the disclosure. The communication device 120 may be a network device (such as the core network device in the above method embodiments), a terminal (such as the first terminal or the third terminal in the above method embodiments), a chip, a system on chip or a processor that supports the network device to implement the above method, or a chip, a system on chip or a processor that supports the terminal to implement the above method. The communication device 120 may be configured to implement the methods described in the method embodiments, and for details reference may be made to descriptions in the method embodiments.

The communication device 120 may include one or more processors 1201. The processor 1201 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU or CU, etc.), to execute a computer program, and process data of the computer program.

Optionally, the communication device 120 may further include one or more memories 1202 with a computer program 1204 stored. The processor 1201 may store a computer program 1203. The computer program 1204 and/or the computer program 1203 is executed so that the communication device 120 performs the method as described in the above method embodiments.

Optionally, the memory 1202 may further store data. The communication device 120 and the memory 1202 may be independently configured or integrated together.

Optionally, the communication device 120 may further include a transceiver 1205 and an antenna 1206. The transceiver 1205 may be referred to as a transceiving unit or a transceiving circuit, which may be configured to achieve a transceiving function. The transceiver 1205 may include a receiver and a transmitter. The receiver may be referred to as a receiving unit or a receiving circuit, etc., for implementing a receiving function; the transmitter may be referred to as a transmitting unit or a transmitting circuit, etc. for implementing a transmitting function.

Optionally, the communication device 120 may further include one or more interface circuits 1207. The interface circuit 1207 is configured to receive code instructions and transmit the code instructions to the processor 1201. The code instructions are executed by the processor 1201 so that the communication device 120 performs the method as described in the above method embodiments.

In an implementation, the processor 1201 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

Optionally, the processor 1201 may store the computer program 1203. The computer program 1203 is executed on the processor 1201 so that the communication device 120 performs the method as described in the above method embodiments. The computer program 1203 may be solidified in the processor 1201, in which case the processor 1201 may be implemented by hardware.

In an implementation, the communication device 120 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a network device (such as the core network device in the above method embodiments) or a terminal (such as the first terminal or the third terminal in the above method embodiments), but the scope of the communication device described in the disclosure is not limited thereto, and a structure of the communication device may not be limited by FIG. 12. The communication device may be an independent device or may be a part of a larger device. For example, the communication device may be the following:
(1) an independent integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded in other devices;
(5) a receiver, a terminal, a smart terminal device, a cellular phone, a wireless device, a handset, a mobile unit, a vehicle-mounted device, a network side device, a cloud device, an artificial intelligence device, etc.;
(6) others, and so forth.

For the case that the communication device may be a chip or a system on chip, reference may be made to a block diagram of a chip shown in FIG. 13. FIG. 13 is a block diagram illustrating the chip according to an embodiment of the disclosure. The chip shown in FIG. 13 includes a processor 1301 and an interface 1302. There may be one or more processors 1301 and there may be a plurality of interfaces 1302.

For the case that the chip is configured to implement functions of the terminal (such as the first terminal or the third terminal in the above method embodiments) in the embodiments of the disclosure, the processor 1301 is configured to implement steps in FIG. 2 to FIG. 5 and steps in FIG. 8 to FIG. 10.

For the case that the chip is configured to implement functions of the network device (such as the core network device in the above method embodiments) in the embodiments of the disclosure, the processor 1301 is configured to implement steps in FIG. 6 to FIG. 7 and steps in FIG. 9 to FIG. 10.

Optionally, the chip further includes a memory 1303, configured to save necessary computer program and data.

Those skilled in the related art may understand that various illustrative logical blocks and steps listed in embodiments of the disclosure, may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond a protection scope of embodiments of the disclosure.

An embodiment of the disclosure further provides a communication system. The system includes a communication apparatus functioning as a network device (such as the core network device in the above method embodiments), and a communication apparatus functioning as a terminal (such as the first terminal or the third terminal in the above method embodiments) in the aforementioned embodiment, or the system includes a communication device functioning as a network device (such as the core network device in the above method embodiments) in the aforementioned embodiment of FIG. 12, and a communication device functioning as a terminal (such as the first terminal or the third terminal in the above method embodiments) in the aforementioned embodiment of FIG. 12.

A readable storage medium with instructions stored is further provided in the disclosure. When the instructions are executed by a computer, steps in the any one method embodiment are implemented.

A computer program product is further provided in the disclosure. The computer program product implements functions of the above any one method embodiment when executed by a processor.

In the above embodiments, the functions may be wholly or partially implemented by software, hardware, firmware, or any combination of them. When implemented by software, the functions may be implemented in whole or in part in a form of a computer program product. The computer program product includes one or more computer programs. Procedures or functions according to embodiments of the disclosure are wholly or partially generated when the computer program is loaded and executed on a computer. The computer may be a general-purpose computer, a special-purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The computer-readable medium may be a magnetic medium (such as a floppy disk, a hard disk and a magnetic tape), an optical medium (such as a digital video disk (DVD)), a semiconductor medium (such as a solid state disk (SSD)), or the like.

Those skilled in the art may understand that various numbers such as first and second involved in the disclosure are distinguished merely for convenience of description, and are not intended to limit the scope of the embodiments of the disclosure, but also not to indicate an order of sequence.

The phase "at least one" in the disclosure may also be described as one or more, and the phase "a plurality of" may refer to two, three, four or more, which is not limited in the disclosure. In the embodiments of the disclosure, for a kind of technical feature, technical features in the kind of technical feature are distinguished by "first", "second", "third", "A", "B", "C" and "D", and there is no order of sequence or magnitude between the technical features described in "first", "second", "third", "A", "B", "C" and "D".

Corresponding relationships indicated by tables in the disclosure may be configured or predefined. A value of information in a table is only an example, and may be configured as other values, which is not limited in the disclosure. When corresponding relationships between information and parameters are configured, it is not always necessary to configure all corresponding relationships indicated in the tables. For example, in the tables in the disclosure, the corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps, hash tables, or hash maps may be used.

Predefined in the disclosure may be understood as defined, pre-defined, stored, pre-stored, pre-negotiated, pre-configured, solidified or pre-fired.

The embodiments of the disclosure are not exhaustive and are merely illustrative of some embodiments, and shall not be construed as specific limitations to the protection scope of the disclosure. In the absence of contradiction, each step in a certain embodiment may be implemented as an independent embodiment, and steps may be arbitrarily combined. For example, a solution obtained by removing some steps from a certain embodiment may also be implemented as an independent embodiment. An order of steps in a certain embodiment may be arbitrarily exchanged. In addition, optional implementations in a certain embodiment may be arbitrarily combined. Further, the embodiments may be arbitrarily combined. For example, some or all steps of different embodiments may be arbitrarily combined, and a certain embodiment may be arbitrarily combined with optional implementations of other embodiments.

In the embodiments of the disclosure, unless otherwise specified and unless there is a logical conflict, terms and/or descriptions between the embodiments are consistent and may refer to each other. Technical features in different embodiments may be combined to form a new embodiment based on their inherent logical relationships.

The terms used in the embodiments of the disclosure are only for the purpose of describing specific embodiments and are not intended to limit the disclosure.

In the embodiments of the disclosure, unless otherwise specified, elements expressed in a singular form, such as "a", "an", "the", "said", "above", "aforementioned", "this", etc., may mean "one and only one" or may mean "one or more", "at least one", etc. For example, when using articles such as "a", "an", or "the" in translation, a noun following the article may be understood as a singular form or a plural form.

In the embodiments of the disclosure, "a plurality of" means two or more.

In some embodiments, terms such as "at least one of", "one or more", "a plurality of", "multiple", etc., may be used interchangeably.

In some embodiments, expressions such as "at least one of A and B", "A and/or B", "in one case A, in another case B", "in response to one case A, in response to another case B", etc. may include the following technical solution based on actual circumstances: in some embodiments, A (performing A independently of B); in some embodiments, B (performing B independently of A); in some embodiments, selecting between A and B (A and B are selectively performed); in some embodiments, A and B (both A and B are performed). The same applies when there are more branches such as A, B, C, etc.

In some embodiments, expressions such as "A or B" may include the following technical solutions based on actual circumstances: in some embodiments, A (performing A independently of B); in some embodiments, B (performing B independently of A); in some embodiments, selecting between A and B (A and B are selectively performed). The same applies when there are more branches such as A, B, C, etc.

The prefixes such as "first", "second", etc., in the embodiments of the disclosure are only used to distinguish different described objects and do not limit a position, order, priority, quantity, or content of the described objects. Description of the objects refers to the claims or the context in the embodiments and should not be construed as an unnecessary limitation due to use of prefixes. For example, if the described object is a "field", ordinal numbers before "field" in "first field" and "second field" do not limit a position or order between the fields, and "first" and "second" do not limit whether modified "fields" are in the same message, and "first" and "second" do not limit a sequence of "first field" and "second field". Another example: if the described object is a "level", ordinal numbers before "level" in "first level" and "second level" do not limit a priority between the levels. Another example: a quantity of the described objects is not limited by the ordinal numbers and may be one or more. Taking "first device" as an example, the quantity of "devices" may be one or more. Further, objects modified by different prefixes may be the same or different. For example, if the described object is a "device", "first device" and "second device" may be the same device or different devices, and their types may be the same or different. Another example: if the described object is "information", "first information" and "second information" may be the same information or different information, and their content may be the same or different.

In some embodiments, "containing A", "including A", "for indicating A", "carrying A" may be interpreted as directly carrying A or indirectly indicating A.

In some embodiments, terms such as "in response to...", "in response to determining...", "in the case of...", "when...", "if...", etc., may be used interchangeably.

In some embodiments, terms such as "greater than", "greater than or equal to", "not less than", "more than", "more than or equal to", "not fewer than", "higher than", "higher than or equal to", "not lower than", "above", etc., may be used interchangeably. Terms such as "less than", "less than or equal to", "not greater than", "fewer than", "fewer than or equal to", "not more than", "lower than", "lower than or equal to", "not higher than", "below", etc., may be used interchangeably.

In some embodiments, terms such as "terminal", "terminal device", "UE", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc., may be used interchangeably.

In some embodiments, an access network device, a core network device, or a network device may be replaced with a terminal. For example, the embodiments of the disclosure may also be applied to a structure where communication between an access network device, a core network device, or a network device and a terminal is replaced with communication between multiple terminals (e.g., which may also be referred to as device-to-device (D2D), vehicle-to-everything (V2X), etc.). In this case, the terminal may have all or part of functions of the access network device. In addition, terms such as "uplink" and "downlink" may be replaced with terms corresponding to inter-terminal communication (e.g., "SL"). For example, an uplink channel or a downlink channel may be replaced with an SL channel, and an uplink or a downlink may be replaced with an SL.

In some embodiments, a terminal may be replaced with an access network device, a core network device, or a network device. In this case, the access network device, the core network device, or the network device may have all or part of functions of the terminal.

In some embodiments, "determining" may be interpreted as, but is not limited to, judging, deciding, adjudicating, calculating, computing, processing, deriving, investigating, searching, looking up, retrieving, inquiring, ascertaining, receiving, transmitting, inputting, outputting, accessing, resolving, selecting, choosing, establishing, comparing, "assuming", "expecting", "considering", broadcasting, notifying, communicating, forwarding, configuring, reconfiguring, allocating, mapping, assigning, etc.

Those skilled in the related art may realize that units and algorithm steps of embodiments described in embodiments of the disclosure may be implemented by electronic hardware or a combination of electronic hardware and computer software. Whether the functions are executed by hardware or software depends on a specific application and a design constraint of the technical solution. Those skilled in the art may adopt different methods for each specific application to implement described functions, but such implementation should not be considered as going beyond the scope of the disclosure.

Those skilled in the related art may clearly understand that for a specific working process of a system, an apparatus and a unit described above reference may be made to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the disclosure. Thus, the protection scope of the disclosure shall be subject to the protection scope of claims.

## Claims

1. A method for selecting a terminal for ranging or sidelink (SL) positioning, performed by a first terminal, comprising:
sending first request information, wherein the first request information requests a core network device to select a second terminal from at least one candidate terminal or assign a second terminal to the first terminal, the candidate terminal is related to information of the first terminal, and information of the second terminal is used for performing the ranging or SL positioning on the first terminal.

2. The method according to claim 1, wherein the first request information comprises at least one of:
quality of service (QoS) required for positioning;
terminal preference;
a first candidate terminal list, wherein the first candidate terminal list is empty;
a second candidate terminal list, wherein the second candidate terminal list comprises information of the at least one candidate terminal;
first indication information, wherein the first indication information instructs the core network device to select the second terminal; or
second indication information, wherein the second indication information instructs the core network device to assign the second terminal to the first terminal.

3. The method according to claim 2, wherein the information of the candidate terminal comprises at least one of:
an identifier of the candidate terminal; or
terminal capability information, wherein the terminal capability information at least comprises a positioning capability supported by the candidate terminal.

4. The method according to any one of claims 1 to 3, wherein sending the first request information comprises any one of:
in a case that the at least one candidate terminal is determined based on the information of the first terminal, sending the first request information, wherein the first request information requests the core network device to select the second terminal from the at least one candidate terminal; or
in a case that the candidate terminal is not determined based on the information of the first terminal, sending the first request information, wherein the first request information requests the core network device to assign the second terminal to the first terminal.

5. The method according to any one of claims 1 to 4, wherein sending the first request information comprises any one of:
sending the first request information to the core network device; or
sending the first request information to a third terminal.

6. The method according to any one of claims 1 to 5, further comprising:
receiving first response information related to the first request information, wherein the first response information indicates the information of the second terminal selected by the core network device or the information of the second terminal assigned by the core network device to the first terminal.

7. The method according to claim 6, wherein receiving the first response information related to the first request information comprises any one of:
receiving the first response information sent by the core network device; or
receiving the first response information sent by a third terminal.

8. The method according to any one of claims 5 to 7, wherein the third terminal comprises at least one of:
a candidate terminal, wherein a non-access stratum (NAS) connection between the candidate terminal and the core network device is available; or
a user equipment (UE) to network relay.

9. The method according to any one of claims 1 to 5, further comprising:
receiving second request information sent by the core network device, wherein the second request information indicates the information of the second terminal selected by the core network device or the information of the second terminal assigned by the core network device to the first terminal.

10. A method for selecting a terminal for ranging or sidelink (SL) positioning, performed by a core network device, comprising:
receiving first request information, wherein the first request information requests the core network device to select a second terminal from at least one candidate terminal or assign a second terminal to a first terminal, the candidate terminal is related to information of the first terminal, and information of the second terminal is used for performing the ranging or SL positioning on the first terminal.

11. The method according to claim 10, wherein the first request information comprises at least one of:
quality of service (QoS) required for positioning;
terminal preference;
a first candidate terminal list, wherein the first candidate terminal list is empty;
a second candidate terminal list, wherein the second candidate terminal list comprises information of the at least one candidate terminal;
first indication information, wherein the first indication information instructs the core network device to select the second terminal; or
second indication information, wherein the second indication information instructs the core network device to assign the second terminal to the first terminal.

12. The method according to claim 11, wherein the information of the candidate terminal comprises at least one of:
an identifier of the candidate terminal; or
terminal capability information, wherein the terminal capability information at least comprises a positioning capability supported by the candidate terminal.

13. The method according to any one of claims 10 to 12, wherein receiving the first request information comprises any one of:
receiving the first request information sent by the core network device; or
receiving the first request information sent by a third terminal.

14. The method according to any one of claims 10 to 13, further comprising any one of:
selecting the second terminal from the at least one candidate terminal based on the first request information; or
assigning the second terminal to the first terminal based on the first request information.

15. The method according to any one of claims 10 to 14, further comprising:
sending first response information related to the first request information, wherein the first response information indicates the information of the second terminal selected by the core network device or the information of the second terminal assigned by the core network device to the first terminal.

16. The method according to claim 15, wherein sending the first response information related to the first request information comprises any one of:
sending the first response information to the first terminal; or
sending the first response information to a third terminal.

17. The method according to any one of claims 13 to 16, wherein the third terminal comprises at least one of:
a candidate terminal, wherein a non-access stratum (NAS) connection between the candidate terminal and the core network device is available; or
a user equipment (UE) to network relay.

18. The method according to any one of claims 10 to 14, further comprising:
sending second request information to the first terminal, wherein the second request information indicates the information of the second terminal selected by the core network device or the information of the second terminal assigned by the core network device to the first terminal.

19. A method for selecting a terminal for ranging or sidelink (SL) positioning, performed by a third terminal, comprising:
sending first request information, wherein the first request information requests a core network device to select a second terminal from at least one candidate terminal or assign a second terminal to the first terminal, the candidate terminal is related to information of the first terminal, and information of the second terminal is used for performing the ranging or SL positioning on the first terminal.

20. The method according to claim 19, wherein the first request information comprises at least one of:
quality of service (QoS) required for positioning;
terminal preference;
a first candidate terminal list, wherein the first candidate terminal list is empty;
a second candidate terminal list, wherein the second candidate terminal list comprises information of the at least one candidate terminal;
first indication information, wherein the first indication information instructs the core network device to select the second terminal; or
second indication information, wherein the second indication information instructs the core network device to assign the second terminal to the first terminal.

21. The method according to claim 20, wherein the information of the candidate terminal comprises at least one of:
an identifier of the candidate terminal; or
terminal capability information, wherein the terminal capability information at least comprises a positioning capability supported by the candidate terminal.

22. The method according to any one of claims 19 to 21, further comprising:
receiving the first request information sent by the first terminal;
wherein sending the first request information comprises:
sending the received first request information to the core network device.

23. The method according to any one of claims 19 to 22, further comprising:
sending first response information related to the first request information, wherein the first response information indicates the information of the second terminal selected by the core network device or the information of the second terminal assigned by the core network device to the first terminal.

24. The method according to claim 23, further comprising:
receiving the first response information sent by the core network device;
wherein sending the first response information related to the first request information comprises:
sending the received first response information to the first terminal.

25. The method according to any one of claims 19 to 24, wherein the third terminal comprises at least one of:
a candidate terminal, wherein a non-access stratum (NAS) connection between the candidate terminal and the core network device is available; or
a user equipment (UE) to network relay.

26. A communication apparatus, comprising:
a transceiver module, configured to send first request information, wherein the first request information requests a core network device to select a second terminal from at least one candidate terminal or assign a second terminal to a first terminal, the candidate terminal is related to information of the first terminal, and information of the second terminal is used for performing the ranging or SL positioning on the first terminal.

27. A communication apparatus, comprising:
a transceiver module, configured to receive first request information, wherein the first request information requests a core network device to select a second terminal from at least one candidate terminal or assign a second terminal to a first terminal, the candidate terminal is related to information of the first terminal, and information of the second terminal is used for performing the ranging or SL positioning on the first terminal.

28. A communication apparatus, comprising:
a transceiver module, configured to send first request information, wherein the first request information requests a core network device to select a second terminal from at least one candidate terminal or assign a second terminal to a first terminal, the candidate terminal is related to information of the first terminal, and information of the second terminal is used for performing the ranging or SL positioning on the first terminal.

29. A communication system, comprising a first terminal, configured to execute the method according to any one of claims 1 to 9, a core network device, configured to execute the method according to any one of claims 10 to 18, and a third terminal, configured to execute the method according to any one of claims 19 to 25.

30. A computer-readable storage medium storing instructions that, when executed, cause the method according to any one of claims 1 to 25 to be implemented.
